# EUROPEAN PATENT APPLICATION

(11) **EP 4 286 200 A1**
(43) Date of publication of application: **06.12.2023**
(21) Application number: 22176643.9
(22) Date of filing: 01.06.2022
(51) Int. Cl.: B60K 35/00

(54) **A VEHICLE, A SYSTEM AND A METHOD FOR REDUCING MOTION SICKNESS FOR A PASSENGER OF A MOVING VEHICLE**

(71) Applicant: Bayerische Motoren Werke Aktiengesellschaft, 80809 München (DE)
(72) Inventor: Lliffe-Moon, Etienne, Menlo Park, CA 94025 (US)

(57) **Abstract**

The invention relates to a system for reducing motion sickness for a passenger of a moving vehicle, comprising: (i) an image provision device which is configured to provide moving images, which are characterized by a parameter, to a projection device; (ii) a device which is configured to provide a first signal to an evaluation unit; (iii) an evaluation unit which is configured to assign the first signal to a category out of a group of predetermined categories; (iv) the image provision device is further configured to receive a second signal from the evaluation unit representing the assigned category; (v) the image provision device is further configured to adapt the parameter of the moving images dependent on the assigned category; (vi) a projection device which is configured to project the adapted moving images to an interior surface of the vehicle, wherein the interior surface is at least partially located in a field of view of the passenger

## Description

The present invention is directed to a vehicle, a system and a method, in particular a computer-implemented method, for reducing motion sickness for a passenger of a moving vehicle.

Motion sickness (Kinetosis) is a significant issue for many passengers. Motion sickness can be the result of a conflict or mismatch in the human sensory system where the information from the vestibular system does not match the information from the visual system. It can appear when the body of the passenger is exposed to physical movements (e.g., changes in direction, velocity, acceleration, vibration, etc.) but that passenger does not sufficiently observe any visual movement at the same time. Especially motion sickness can occur for passengers in the rear seats that do not have a good view of the moving road and landscape in front of them. For those passengers motion sickness can occur when these passengers are reading a book or when they are viewing a content at a display in front of them. In such situation eyes of the passengers are fixated on a static book or display and their vestibular system's sense bodily movement (i.e., from the motion associated with travelling in a car, such as the forces from acceleration, deceleration, cornering, etc.). Other senses such as touch, smell and/or temperatures may also play a role in the effect.

In vehicles there is a trend towards bigger and better displays in the vehicle. This trend is driven by consumer desire for enhanced entertainment/infotainment functionality and digital life integration. This is enabled by advancements in technology such as display, 5G and processor advances, along with factors such as technology maturity, automotive-grade readiness and cost reduction.

However, bigger displays can even further reduce the view of passengers to the road or landscape, which can increase motion sickness. On the other hand, motion sickness prevents vehicle passengers from using large displays or enjoying activities or tasks like reading, watching movies or using smart devices (e.g., smartphones, tablets or laptops) while the vehicle is in motion.

It is an object of the present invention reducing motion sickness for passengers of a moving vehicle.

A solution to this problem is provided by the teaching of the independent claims. Various preferred embodiments of the present invention are provided by the teachings of the dependent claims.

A first aspect of the invention is directed to a system for reducing motion sickness for a passenger of a moving vehicle, comprising: (i) an image provision device which is configured to provide moving images, which are characterized by a parameter, to a projection device; (ii) a device which is configured to provide a first signal to an evaluation unit; (iii) an evaluation unit, in particular an electronical unit comprising an evaluation-algorithm, which is configured to assign the first signal to a category out of a group of predetermined categories; (iv) the image provision device is further configured to receive a second signal from the evaluation unit representing the assigned category; (v) the image provision device is further configured to adapt the parameter of the moving images dependent on the assigned category; (vi) a projection device, in particular a DLP, LCOS, LCD, micro-display, a laser-based projection device, LED, or the like, which is configured to project the adapted moving images to an interior surface of the vehicle, wherein the interior surface is at least partially located in a field of view of the passenger.

Where the term "comprising" or "including" is used in the present description and claims, it does not exclude other elements or steps. Where an indefinite or definite article is used when referring to a singular noun e.g. "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The term "one" as used herein are defined in the sense of "one or more". The terms "another" and "a further" and any other variant thereof are to be understood in the sense of "at least one more".

The term "plural" as used herein shall be understood in the sense of "two or more".

The term "configured" or "set up" to perform a certain function (and respective variations thereof) is to be understood in the sense of the invention as meaning that the corresponding device is already present in a configuration or setting in which it can perform the function or that it is at least adjustable - i.e. configurable - in such a way that it can perform the function after corresponding adjustment. In this context, the configuration can be carried out, for example, by means of a corresponding setting of parameters of a process sequence or of switches or the like for activating or deactivating functionalities or settings. In particular, the device can have several predetermined configurations or operating modes, so that the configuration can be performed by means of a selection of one of these configurations or operating modes.

Accordingly, the system of the first aspect can enable a reduction or elimination of motion sickness or the symptoms of motion sickness by better aligning the passengers' sensory system inputs. This can be achieved by providing moving images through a projection to the passenger, and wherein the moving images are adapted dependent on the assigned category. This means even if the passenger is not viewing streets, traffic our surroundings of the vehicle while the vehicle is moving, the passenger can still view moving images through the projection of the moving images onto an interior surface of the vehicle. This is in particular effective because the projection device is configured to project adapted moving images. The moving images are adapted depending on an assigned category, wherein the category is assigned dependent to the first signal of the device. In this way a mismatch in the human sensory system where the information from the vestibular system does not match the information from the visual system can be reduced and a possible motion sickness can be reduced. A passenger's motion sickness can affect the driver, reducing driving safety, for example, by the passenger's articulated discomfort, desire to stop urgently, passing smells, or odours of vomit. By reducing the motion sickness of the passenger also the safety of driving can be increased.

In the following, certain preferred embodiments of the method will be described, which can be arbitrarily combined with each other or with other aspects of the present invention, unless such combination is explicitly excluded or technically impossible.

In some embodiments the device comprises a display device, in particular a LCD or OLED based screen, and the first signal comprises a graphical content which can be displayed by the display device. This may enable an adaption of the moving images dependent on the assigned category of the graphical content. For this purpose, the graphical content to be shown by the display device is evaluated by the evaluation unit. The category can comprise movies, stills, videogames and/or also text. A sub-category might be even action-movie or documentary. Other categories can comprise physical properties of the displayed images, such as colour or contrast. In case the graphical content provides a movie, the moving images might move at a faster rate compared to a situation where the graphical content provides single stills. As a result, the received visual content by the passenger through the display device in conjunction with the received visual content through the projections can further decrease or prevent motion sickness of the passenger.

In some embodiments the device comprises a first sensor, in particular an acceleration sensor and/or a speed sensor, and the first signal comprises a third signal representing a movement of the vehicle, in particular regarding speed, acceleration/deceleration and/or directional changes, and wherein the third signal can be received by the first sensor. The different dynamics of movement can represent different categories. The movement of the vehicle and the kind of movement can be perceived by the passenger, in particular through the vestibular system. By adapting the moving images according to the movement of the vehicle, a mismatch in the human sensory system where the information from the vestibular system does not match the information from the visual system can be further decreased, and motion sickness can be further decreased.

In some embodiments the device comprises a second sensor, in particular an electro-optical and/or electro-acoustical sensor, and the first signal comprises a fourth signal representing a surrounding of the vehicle, and wherein the fourth signal is received by the second sensor. Quickly changing surroundings of the vehicle, which can lead to different light situations and different patterns which are visible through the windows of the vehicle, can also cause motion sickness. Moving images which are adapted to the surroundings can decrease this effect. For example, if the vehicle is about to enter a tunnel and before the tunnel the vehicle has passed an area with trees, the adapted moving images can comprise some bright light including moving images of passing trees, so that the perceived visual difference for the passenger when the vehicle enters the tunnel is decreased. This can further decrease the motion sickness.

In some embodiments the system comprises a third sensor, in particular an electrooptical and/or electro-acoustical sensor, which is configured to receive a fifth signal representing at least a portion of a head, in particular at least a portion of the face, in particular eyes and/or mouth, of the passenger, and wherein the evaluation unit is configured to determine a status of the head based on the received fifth signal, and wherein the evaluation unit is further configured to assign a category based on the determined status of the head. An image information representing the head of the passenger can be received by a camera of the car. This information can be processed with known algorithms regarding face recognition and/or regarding fatigue recognition to determine the status of the head. The then determined status can be assigned to a category. In case the status is that the passenger is sleeping or busy with a phone call, a projection of moving images might not be required. In case the status is that passengers view is towards the display device, a projection of moving images can reduce the motion sickness. In case the status is that the head is bent downwards with a certain angle which indicates that the passenger is reading, a different adaption of the moving images, compared to the viewing a graphical content at the display, can be applied, so that the motion sickness if further decreased.

In some embodiments the projection device is aligned so that the projection is directed to the display device so that the projection covers at least partially a surface or a frame of the surface of the display device on which the graphical content is displayed. This may ensure that the passenger perceives the moving images and the content of the display device, because both of these are viewable within the area of the display device. This can also enable, that the field of view that is required of the passenger to perceive both of these is smaller, and the perception of the moving images is improved because it is more centred in the field of view.

In some embodiments the image provision device is configured to generate the moving images by an algorithm. This may enable a more flexible adaption of the moving images where moving images can be generated according to individual needs.

In some embodiments the image provision device comprises a storage medium on which the moving images are stored, in particular at a storage which is located at the vehicle or a storage which can be accessed by a wireless network. This may enable a solution where little computational power is required, because the moving images need not to be generated.

In some embodiments the system comprises a plural of projection devices, which are aligned so that the projections are projected in mutual different directions. This may enable that a larger projection-area can be covered. This can ensure that the passenger can view the projected content even if looking at different directions. It may also be possible to project different moving images with each projecting device, so that the projections can provide a combined effect.

In some embodiments the image provision device is configured to provide moving 3D-images and/or moving virtual reality images and/or moving augmented reality images. These kinds of moving images can be more realistic compared to moving 2D-images and can lead to an improved reduction of motion sickness. For example, augmented reality (AR) images can be viewed with AR glasses which display the moving images to reduce motion sickness in the general visual field of the user, but not over the large display (or any display within the cabin). Additionally, an AR position and orientation tracking system can enable the moving images to be positioned within a 3D virtual environment that aligns with the interior of the vehicle, e.g. when the passenger looks away (changes head/viewing orientation) the moving images can still be perceived by the passenger and the physical masking of the display is spatially correct.

In some embodiments the system comprises a control unit which is configured to receive data representing the status and/or the content of further display devices, in particular door pods or others, which are configured to display a graphical content, wherein the control unit is further configured to coordinate such that the projection can be masked for the further display devices, or the projection includes a portion of the further display devices. This can enable that the perceived visual information by the passenger leads to a coordinated impression so that the motion sickness is decreased.

In some embodiments the image provision device is further configured to adapt the parameter dependent to a stored user profile of the passenger. This may enable a more effective provision of adapted moving images. There may be passengers who are more affected by motion sickness than others. In case there is a passenger who is not affected by motion sickness there might be no need for projecting moving images in this respect, which could save computational power, and which can avoid and affection of the projected moving images to other passengers. In case a passenger may be strongly affected by motion sickness the adaption of the moving images may be stronger related to the particular needs of this passenger. For example, if the passenger is particular sensitive to directional changes, the projection might be only enabled if such a directional change occurs. This enables a more effective and personalized reduction of motion sickness.

In some embodiments the image provision device is further configured to adapt both the parameter of the moving images and to provide the moving images to the projection device continuously in real-time while the vehicle is moving. This enables an adaption according to a current first signal which may change over time. For example, the moving images may be adapted to displayed colours of the display device continuously at any moment in time. Further the system can evaluate a video signal provided to the display, or of a digital media streamed to the evaluation unit. A continuously adaption in real-time can further decrease the motion sickness because the current projected moving images are better adapted to a current situation compared to adapted signals which related to a former situation.

A second aspect of the invention is directed to a vehicle comprising a system of the first aspect.

A **third aspect** of the invention is directed to a method, in particular a computer-implemented method, comprising the steps: (i) providing a first signal by a device to an evaluation unit; (ii) assigning the first signal to a category out of group of predetermined categories by the evaluation unit; (iii) adapting provided moving images depending on the assigned category; (iv) projecting the adapted moving images to an interior surface of the vehicle, wherein the interior surface is at least partially located in a field of view of the passenger.

The various embodiments and advantages described above in connection with the first aspect of the present invention similarly apply to the other aspects of the invention.

Further advantages, features and applications of the present invention are provided in the following detailed description and the appended figures, wherein:
**Fig. 1** schematically illustrates a vehicle with an embodiment of a system of the present invention; and
**Fig. 2** schematically illustrates a flowchart illustrating an exemplary method of the present invention.

In the figures, identical reference signs are used for the same or mutually corresponding elements of the invention described herein.

### DETAILED DESCRIPTION OF EMBODIMENTS

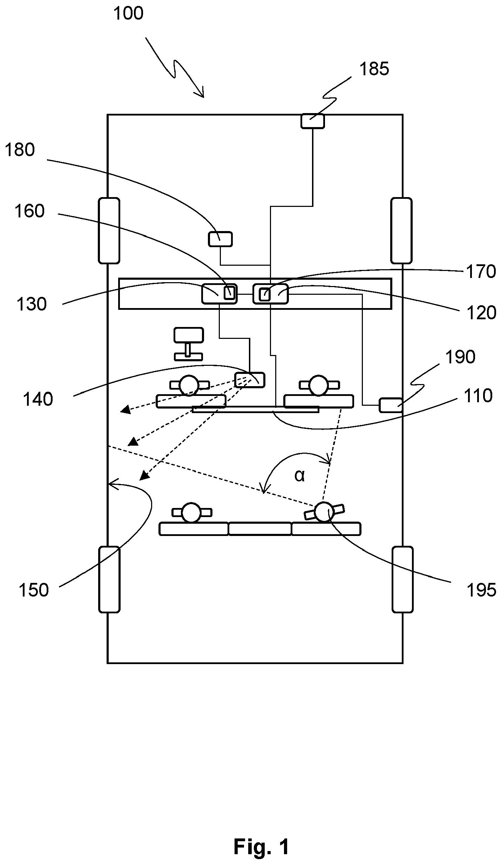

**Figure 1** schematically illustrates a vehicle 100 with an embodiment of a system of the present invention. In an interior of the vehicle 100 a display device 110 is arranged at a backside of front seats so that a passenger 195 seating at a rear seat can view the content, in particular graphical content, which is displayed at the display device 110. The display device 110 is connected to an evaluation unit 120 via a cable connection and/or a wireless connection. The evaluation unit 120 can receive signals from the display device 120, and the signals can be evaluated at the evaluation unit 120. These signals comprise information regarding the graphical content. The evaluation process comprises assigning the first signal, i.e., the graphical content, to a category out of a group of predetermined categories. The category can comprise movies, stills, videogames and/or also text. A sub-category might be even action-movie or documentary. Other categories can comprise physical properties of the displayed images, such as colour or contrast. In case the graphical content provides a movie, the moving images might move at a faster rate compared to a situation where the graphical content provides single stills. As a result, the received visual content by the passenger 195 through the display device 110 in conjunction with the received visual content through the projections can decrease or prevent motion sickness of the passenger 195.

The system further comprises an image provision device 130 which is connected to the evaluation unit 120 and to a projection device 130 via a cable connection and/or a wireless connection, so that signals can be exchanged between the image provision device 130 and the evaluation unit 120 on the one hand, and with the projection device 140 on the other hand. The image provision device 130 can comprise a computer with a storage medium 160 and a program or an algorithm. The image provision device 130 is configured to provide moving images. The moving images can be stored at the storage medium 160 and/or the moving images can be generated by the algorithm. In case the moving images are stored, the moving images can be selected and used dependent on the assigned category. In case the moving images are generated by the algorithm, the moving images are generated dependent on the assigned category.

Once the moving images are adapted by the image provision device 130, the adapted moving images are provided to the projection device 140 by the image provision device 130.

The projection device 140 is configured to project the received adapted moving images to an interior surface 150 of the vehicle 100. The projection device 140 is arranged and/or oriented so that the projected moving images by the projection device 140 are at least partially in the field of view of the passenger 195 who is viewing the graphical content of the display device 110. In Figure 1 the passenger 195 is located on a right rear seat and is facing the display device 110 which is arranged at the backside of the front seats. The field of view of the passenger 195 is indicated with an angle α. However, in reality the field of view might be even larger dependent on the individual human being. The projection device 140 projects the moving images towards the interior surface 150 on the left rear side, so that the passenger 195 who is viewing the display device 150 with an oblique direction can also view the moving images. It is also possible that the system comprises a plural of projection devices 140 (not shown here), which are aligned so that the projections are projected in mutual different directions.

Further the system comprises a first sensor 180 for receiving a signal representing a movement of the vehicle, and the moving images can be adapted dependent to the movement of the vehicle.

The system further comprises a second sensor 185 for receiving a signal representing a surrounding of the vehicle and the moving images can be adapted dependent to the surrounding of the vehicle.

The system further comprises a third sensor 190 which is configured to receive a signal representing at least a portion of a head of the passenger, wherein the evaluation unit is configured to determine a status of the head based on the received fifth signal, and wherein the evaluation unit is further configured to assign a category based on the determined status of the head, and the moving images can be adapted dependent to the status of the head.

It is also possible that the system comprises none or one of the first sensor 180, the second sensor 185 and the third sensor 190.

The system may further comprise a control unit 170 which is configured to receive data representing the status and/or the content of further display devices which are configured to display a graphical content, wherein the control unit is further configured to coordinate such that the projection can be masked for the further display devices, or the projection includes a portion of the further display devices.

At least two of the image provision device 130, the evaluation unit 120 and the control unit 170 may be integrated in one device.

The system can enable a reduction or elimination of motion sickness or the symptoms of motion sickness by better aligning the passengers' 195 sensory system inputs. This means even if the passenger 195 is not viewing streets, traffic our surroundings of the vehicle 100 while the vehicle 100 is moving, the passenger 195 is still provided with moving images through the projection of the moving images to an interior surface 150 of the vehicle 100.

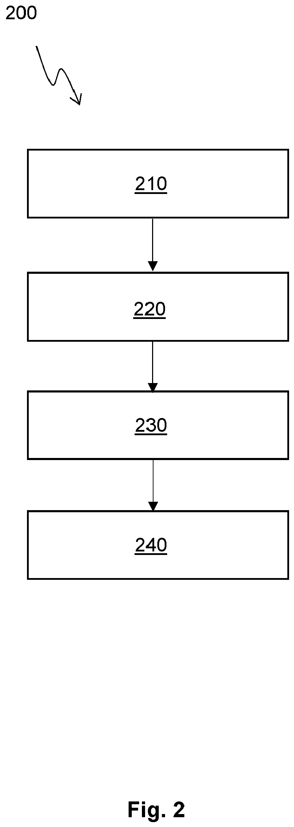

**Figure 2** schematically illustrates a flowchart 200 illustrating an exemplary method for reducing motion sickness for a passenger 195 of a moving vehicle 100, comprising the steps:
A first step 210 of the method comprises providing a first signal by a device 110 to an evaluation unit 120.
A further step 220 of the method comprises assigning the first signal to a category out of group of predetermined categories by the evaluation unit 120.
A further step 230 of the method comprises adapting provided moving images depending on the assigned category;
A further step 240 of the method comprises projecting the adapted moving images to an interior surface 150 of the vehicle 100, wherein the interior surface 150 is at least partially located in a field of view of the passenger.

While above at least one exemplary embodiment of the present invention has been de-scribed, it has to be noted that a great number of variations thereto exists. Furthermore, it is appreciated that the described exemplary embodiments only illustrate non-limiting examples of how the present invention can be implemented and that it is not intended to limit the scope, the application or the configuration of the hereindescribed apparatus' and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 100: Vehicle
- 110: Display device
- 120: Evaluation unit
- 130: Image provision device
- 140: Projection device
- 150: Interior surface
- 160: Storage medium
- 170: Control unit
- 180, 185, 190: First, second and third sensor
- 195: Passenger

- 200: Flowchart illustrating an exemplary method of the invention
- 210: Providing a first signal
- 220: Assigning the first signal to a category
- 230: Adapting provided moving images
- 240: Projecting the adapted moving images

- α: Angle of field of view

## Claims

1. A System for reducing motion sickness for a passenger (195) of a moving vehicle (100), comprising:
an image provision device (130) which is configured to provide moving images, which are **characterized by** a parameter, to a projection device (140);
a device (110) which is configured to provide a first signal to an evaluation unit (120);
an evaluation unit (120) which is configured to assign the first signal to a category out of a group of predetermined categories;
the image provision device is further configured to receive a second signal from the evaluation unit (120) representing the assigned category;
the image provision device (130) is further configured to adapt the parameter of the moving images dependent on the assigned category;
a projection device (140) which is configured to project the adapted moving images to an interior surface (150) of the vehicle (100), wherein the interior surface (150) is at least partially located in a field of view of the passenger (195) .

2. The system of claim 1, wherein the device comprises a display device (110) and the first signal comprises a graphical content which can be displayed by the display device (110).

3. The system of claim 1 or 2, wherein the device comprises a first sensor (180) and the first signal comprises a third signal representing a movement of the vehicle (100) and wherein the third signal can be received by the first sensor (180).

4. The system of any one of claims 1 to 3, wherein the device (110) comprises a second sensor (185) and the first signal comprises a fourth signal representing a surrounding of the vehicle (100), and wherein the fourth signal is received by the second sensor (185).

5. The system of any one of the preceding claims, comprising a third sensor (190) which is configured to receive a fifth signal representing at least a portion of a head of the passenger (195), and wherein the evaluation unit (120) is configured to determine a status of the head based on the received fifth signal, and wherein the evaluation unit (120) is further configured to assign a category based on the determined status of the head.

6. The system of any one of claims 2 to 5, wherein the projection device is aligned so that the projection is directed to the display device (110) so that the projection covers at least partially a surface or a frame of the surface of the display device (110) on which the graphical content is displayed.

7. The system of any one of the preceding claims, wherein the image provision device (130) is configured to generate the moving images by an algorithm.

8. The system of any one of the preceding claims, wherein the image provision device (130) comprises a storage medium (160) on which the moving images are stored.

9. The system of any one of the preceding claims, comprising a plural of projection devices (140), which are aligned so that the projections are projected in mutual different directions.

10. The system of any one of the preceding claims, wherein the image provision device (130) is configured to provide moving 3D-images and/or moving virtual reality images and/or moving augmented reality images.

11. The system of any one of the preceding claims, comprising a control unit (170) which is configured to receive data representing the status and/or the content of further display devices (110) which are configured to display a graphical content, wherein the control unit is further configured to coordinate such that the projection can be masked for the further display devices (110), or the projection includes a portion of the further display devices (110).

12. The system of any one of the preceding claims, wherein the image provision device (130) is further configured to adapt the parameter dependent to a stored user profile of the passenger.

13. The system (100) of any one of the preceding claims, wherein the image provision device (130) is further configured to adapt both the parameter of the moving images and to provide the moving images continuously in real-time to the projection device (140) while the vehicle (140) is moving.

14. A vehicle (100) comprising the system of any one of the preceding claims.

15. A method for reducing motion sickness for a passenger of a moving vehicle (100), comprising the steps:
providing a first signal by a device to an evaluation unit (120);
assigning the first signal to a category out of group of predetermined categories by the evaluation unit (120);
adapting provided moving images depending on the assigned category; projecting the adapted moving images to an interior surface (150) of the vehicle (100), wherein the interior surface (150) is at least partially located in a field of view of the passenger (195).
